(19) Europäisches Patentamt

European Patent Office

Office européen des brevets

(11) EP 0 658 577 B1

(12) **EUROPEAN PATENT SPECIFICATION**

(45) Date of publication and mention
of the grant of the patent:
**16.07.1997 Bulletin 1997/29**

(51) Int Cl.⁶: **C08F 110/06**, C08F 4/646,
C08J 5/18, D04H 1/42

(21) Application number: **94119701.4**

(22) Date of filing: **14.12.1994**

(54) **Propylene homopolymer resins having a high stereoblock content**

Propylen-Homopolymerharze mit einem hohen Stereoblockgehalt

Résines à base d'homopolymère de propylène ayant un taux élevé de stéréoséquences

(84) Designated Contracting States:
**AT BE DE DK ES FR GB IT NL SE**

(30) Priority: **16.12.1993 US 168697**
**07.12.1994 US 349069**

(43) Date of publication of application:
**21.06.1995 Bulletin 1995/25**

(73) Proprietor: **MONTELL NORTH AMERICA INC.**
**Wilmington Delaware 19850-5439 (US)**

(72) Inventors:
• **Yoo, Hee Ju**
**Wilmington, Delaware 19803 (US)**

• **Robeson, Leroy V.**
**Hockessin, Delaware 19803 (US)**

(74) Representative: **Fuchs, Luderschmidt & Partner**
**Patentanwälte**
**Postfach 46 60**
**65036 Wiesbaden (DE)**

(56) References cited:
| | |
|---|---|
| **EP-A- 0 298 730** | **EP-A- 0 349 772** |
| **EP-A- 0 400 622** | **EP-A- 0 473 899** |
| **EP-A- 0 497 590** | **EP-A- 0 552 013** |
| **EP-A- 0 622 380** | **FR-A- 2 532 652** |

## Description

This invention relates to crystalline propylene homopolymers. More particularly, it relates to crystalline propylene homopolymers, films and fibers produced therefrom, and nonwoven fabric made from said fibers.

In a spunbond or staple nonwoven process, spun or carded fiber webs usually go through a thermal bonding step to be made into fabrics which have integrity and strength needed for various applications. In laminate structures where two or more layers of nonwoven webs are involved, the thermal bonding is a necessary step to put the layers together. In these processes an optimum bonding temperature is selected in order to achieve acceptable fabric properties. The bonding window, a temperature range whereby acceptable bonding is achieved, should also be wide enough for the bonding process to be practical.

In the thermal bonding of single layer spunbond or thermally bondable fabrics, the bonding temperature is typically set at a temperature at which the maximum fabric strength is obtained, also referred to as the optimum bonding temperature. For conventional propylene homopolymer resins this temperature range is typically from 140°C-150°C for spunbond fabrics and from 155°C-165°C for thermally bonded fabrics. However, due to the high crystallinity of conventional propylene homopolymer resins, the bonding window is very narrow.

For laminate structures the optimum bonding temperature is generally set at a temperature whereby the differences in bonding characteristics between the different type of layers can be balanced, because each layer has different bonding characteristics due to the differences in the fiber size or in the polymer type used. This difference is intentional since each layer is designed to perform different physical property requirements.

Take for example a laminate structure wherein the outer layers are intended for strength and abrasion, and the inner layers are for barrier properties. Because of the differences in property requirements, the fiber size used for the inner layers is usually much smaller than the fiber size used for the outer layers. Also, the polymer type used is different in order to meet spinning requirements.

Because of the differences in the fiber size and the polymer type, the inner layer generally requires a lower bonding temperature than the outer layer, a difference of from 10 to 20°C. This creates a problem in selecting an optimum bonding temperature for laminate structures. For example, if the bonding temperature is set for the outer layer, pin holes caused by excessive fiber melting in the inner layer will be encountered which are detrimental to barrier properties. In the alternative, if the bonding temperature is set for the inner layer, the laminate will have lower abrasion resistance due to inadequate bonding of the outer layer.

Therefore, with conventional propylene homopolymer resins, the bonding temperature must be precisely controlled in order to make acceptable laminates, which means a very narrow bonding window. Since any small deviation in bonding temperature can produce off-spec fabrics due to either the presence of pin holes or poor abrasion resistance, attempts have been made to solve this problem by using propylene polymer resins with lower melting temperatures for the outer layer, such as ethylene-propylene random copolymers. By employing random copolymers it is hoped that the low melting nature of the random copolymers will narrow down the difference in optimum bonding temperature between the outer layers and inner layers. However, the random copolymers tend to decrease the strength of the fabric, particularly in the case of the spunbond layer and, in some cases, creates spinning problems, such as sticking to the spinning equipment which creates disruption in the spinning continuity.

Hence, there is a need for a propylene homopolymer resin from which fibers can be produced having a lower bonding temperature and a wider bonding window.

EP-A 622380 discloses crystalline propylene polymers having P.I. values lower than or equal 3.7. Different catalysts are disclosed which are used for the preparation of the polymers. One of these catalysts is a reaction product of (A) a solid catalyst component, (B) an Al-alkyl compound, and optionally (C) an electron-donor compound.

Solid catalyst component (A) comprises an active magnesium halide and, supported on the latter, a titanium compound containing at least one Ti-halogen bond and an electron-donor compound selected among the ethers containing two or more ether functions.

Catalyst component (C) is selected from silicon compounds containing at least one Si-OR bond (R=hydrocarbon radical), and 2,2,6,6-tetramethyl piperidine.

Examples of silicon compounds are (tert-butyl)$_2$, Si(OCH$_3$)$_2$, (cyclohexyl)$_2$ Si(OCH$_3$)$_2$ and (phenyl)$_2$ Si(OCH$_3$)$_2$.

It has been surprisingly found that by using a specific Ziegler-Natta supported catalyst containing a 3,3,3-trifluoropropyl-(alkyl)dimethoxysilane there is obtained, directly in polymerization, a propylene homopolymer which has a crystalline structure different from the crystalline structure of conventional propylene homopolymer prepared with other Ziegler-Natta catalysts in that it contains a much higher stereoblock content in their crystalline structure than the conventional propylene homopolymer, and has a relatively narrow molecular weight distribution.

As used herein, the term "stereoblock" means the crystalline structure of the polymer produced in the polymerization process with a Ziegler-Natta catalyst that has single polymerized monomer unit defects in the polymer chain such that the methyl group of the polymerized propylene monomer (the monomer unit defect) is in a different plane from the methyl group of the other polymerized propylene monomers. The average number of monomer unit defects is 35/1000 carbon atoms of the polymer. The number of monomer unit defects ranges from 20 to 60/1000 carbon atoms of the polymer.

The high stereoblock propylene homopolymers of the present invention provide an alternative to the conventional propylene homopolymers, used in single layer applications, and the ethylene-propylene random copolymers, used in laminate structures. In the single layer applications, the propylene homopolymers of the invention have a lower bonding temperature and wider bonding window than the convention propylene homopolymers. In the laminate structures, said propylene homopolymers of the invention have melting characteristics similar to the random copolymers typically used, and therefore narrows the bonding temperature gap between the layers. However, the high stereoblock propylene homopolymers of the instant invention are superior to the random copolymers, in that the decrease in the fabric strength is much less than the random copolymer, and the propylene homopolymers of the invention are not sticky, eliminating the spinning problems associated with the stickiness of the random copolymer.

Accordingly, the present invention provides fibers produced from a propylene homopolymer having a stereoblock of at least 20%, preferably at least 25%, a P.I. value of from 3.0 to 5.0, preferably from 3.2 to 4.0 and a melt flow rate of from 0.15 to 1000 g/10 min, the propylene homopolymer being obtained in the presence of the catalyst described below.

Another embodiment of the present invention is a web containing fibers of a propylene homopolymer having a stereoblock of at least 20%, preferably at least 25%, a P.I. value of from 3.0 to 5.0, preferably from 3.2 to 4.0 and a melt flow rate of from 0.15 to 1000 g/10 min, and fabric material produced therefrom.

A further embodiment of the present invention is films or sheets of the said propylene homopolymer having a stereoblock of at least 20%, preferably at least 25%, a P.I. value of from 4.5 to 6.5, preferably from 5.0 to 6.5 and a melt flow rate of from 0.15 to 1000 g/10 min.

Figure 1. is a plot showing the relationship between the cross-directional (CD) fabric grab tensile strengths as a function of bonding temperatures for the propylene homopolymer of the present invention and a conventional propylene homopolymer and random copolymer of propylene and ethylene.

Fig. 2 is a plot showing the relationship between the fabric softness as a function of bonding temperatures for the propylene homopolymer of the present invention and a conventional propylene homopolymer.

All parts and percentages used in this application are by weight unless otherwise specified. Ambient or room temperature is approximately 25°C.

The catalyst used in the process for the preparation of the propylene homopolymer of the present invention comprises the reaction product of:

(A) a solid catalyst component comprising an active magnesium halide and, supported thereon, a titanium compound containing at least one Ti-halogen bond and an electron donor;
(B) an Al-alkyl compound; and
(C) a 3,3,3-trifluoropropyl(alkyl)dimethoxy silane.

The electron donor compounds employed in the solid catalyst component (A) include alkyl, aryl and cycloalkyl esters of aromatic acids, especially benzoic acid or phthalic acid and their derivatives. Specific examples include ethyl benzoate, n-butyl benzoate, methyl p-toluate, methyl p-methoxybenzoate and diisobutylphthalate. In addition to the above, esters, alkyl or alkaryl ethers having only one ether linkage, ketones, mono- or polyamines, aldehydes and phosphorous compounds, such as phosphines and phosphoramides can also be used as the electron donor.

The preparation of the above mentioned catalysts is carried out according to various methods.

For example, the magnesium halide (anhydrous, i.e., containing less than 1% of water), the titanium compound, and the electron-donor compound can be milled under conditions where the magnesium halide is active. The milled product is then treated one or more times with an excess of $TiCl_4$ at temperatures from 80° to 135°C, after which it is washed repeatedly with a hydrocarbon, such as hexane, until all the chlorine ions have disappeared.

According to another method, the anhydrous magnesium halide is preactivated according to known methods, and then caused to react with an excess of $TiCl_4$ containing the electron-donor compound in solution. Here again, the treatment takes place at temperatures ranging from 80°C to 135°C. Optionally, the treatment with $TiCl_4$ is repeated, and the solid washed with hexane, or another hydrocarbon solvent, in order to eliminate all traces of nonreacted $TiCl_4$.

According to another method, a $MgCl_2.nROH$ adduct (in particular in the form of spheroidal particles), where n is generally comprise from 1 and 3, and ROH is ethanol, butanol, or isobutanol, is reacted with an excess of $TiCl_4$ containing the electron-donor compound in solution. The temperature generally ranges from 80°C to 120°C. The solid is then isolated and reacted once more with the $TiCl_4$, after which it is separated and washed with a hydrocarbon until all chlorine ions have disappeared.

According to another method, magnesium alcoholates and chloroalcoholates, particularly the chloroalcoholates prepared according to the method described in U.S. 4,220,554, are reacted with an excess of $TiCl_4$ containing the electron-donor compound in solution, carried out according to the reaction conditions described above.

In the solid catalyst component (a), the titanium compound expressed as Ti is generally present in a percentage ranging from 0.5 to 10% by weight. The quantity of electron-donor compound which remains fixed on the solid component (internal donor), generally ranges from 5 to 20% in moles with respect to the magnesium dihalide.

Suitable examples of the titanium compound having at least a Ti-halogen bond are Ti tetrahalides, in particular, $TiCl_4$. However, alkoxy halides thereof can also be used.

The reactions indicated above bring about the formation of magnesium halide in active form. Besides these reactions, other reactions are known in the literature which cause the formation of activated magnesium halide starting from magnesium compounds different from the halides, such as carboxylates of magnesium, for example.

The active form of the magnesium halides in the catalyst components (A) can be recognized by the fact that in the X-ray spectrum of the catalyst component the major intensity reflection, which appears on the spectrum of the nonactivated magnesium chloride (having a surface area smaller than 3 $m^2/g$), is no longer present, but in its place there is a halo with the maximum intensity shifted with respect to the position of the major intensity reflection of the nonactivated magnesium dihalide, or by the fact that the major intensity reflection shows a width at half-height at least 30% greater than the one of the major intensity reflection which appears in the nonactivated Mg chloride spectrum.

The most active forms are those where the above mentioned halo appears in the X-ray spectrum of the component.

Among the magnesium halides, the chloride is the preferred compound. In the case of the most active forms of magnesium chloride, the X-ray spectrum of the catalyst component shows a halo instead of the reflection which in the spectrum of the nonactivated chloride appears at a distance of 2.56 Å.

The Al-alkyl compounds (B) used as co-catalysts comprise the Al-trialkyls, such as Al-triethyl, Al-isobutyl, Al-tri-n-butyl, and linear or cyclic Al-alkyl compounds containing two or more Al atoms through O or N atoms, or $SO_4$ and $SO_3$ groups.

Examples of these compounds are:

$(C_2H_5)_2Al-O-Al(C_2H_5)_2$ ; $(C_2H_5)_2Al-N(C_6H_5)-Al(C_2H_5)_2$ ;
$(C_2H_5)_2Al-SO_2-Al(C_2H_5)_2$ ; $CH_3[(CH_3)Al-O-]_nAl(CH_3)_2$ ;
$[(CH_3)Al-O-]_n$

where n is a number from 1 to 20.

The Al-alkyl compound is generally used in such quantities that the Al/Ti ratio ranges from 1 to 1000.

The alkyl of the 3,3,3-trifluoropropyl(alkyl)dimethoxy silane of component (C) can be either methyl or ethyl, and preferably methyl.

The catalyst, i.e., components (A), (B), and (C) can be added to the polymerization reactor by separate means substantially simultaneously, regardless of whether the monomer is already in the reactor, or sequentially if the monomer is added to the polymerization reactor later. It is preferred to premix components (A) and (B), then contact said premix with component (C) prior to the polymerization for from 3 minutes to about 10 minutes at ambient temperature.

The propylene monomer can be added prior to, with or after the addition of the catalyst to the polymerization reactor. It is preferred to add it after the addition of the catalyst.

Hydrogen can be added as needed as a chain transfer agent for reduction in the molecular weight of the polymer.

The polymerization reactions can be done in slurry, liquid or gas phase processes, or in a combination of liquid and gas phase processed using separate reactors, all of which can be done either by batch or continuously.

The polymerization is generally carried out at a temperature of from 40°C-90°C and at atmospheric pressure or higher pressure.

The catalysts may be precontacted with small quantities of propylene monomer (prepolymerization), maintaining the catalyst in suspension in a hydrocarbon solvent and polymerizing at a temperature of 60°C or below for a time sufficient to produce a quantity of polymer from 0.5 to 3 times the weight of the catalyst.

The prepolymerization can also be done in liquid or gaseous monomer to produce, in this case a quantity of polymer up to 1000 times the catalyst weight.

The following examples are shown to illustrate the invention and are not intended to define the scope thereof.

Unless otherwise specified, the following analytical methods are used to characterize the propylene homopolymers of this invention, fabrics prepared therefrom and comparative fabric materials.

| Properties | Method |
|---|---|
| Melt Flow Rate, g/10 min. | ASTM-D 1238, condition L |
| Intrinsic Viscosity, I.V. | Determined in tetrahydronaphthalene at 135°C |
| Grab Tensile Strength Test | ASTM-D 1682 and ASTM-D 1776 |
| Softness Test | ASTM-D 1388-64 |

Polydispersity Index, P.I. - Measurement of the molecular weight distribution in the polymer, $M_w/M_n$. To determine

the P.I. value, the modulus separation at low modulus value, e.g., 500 Pa, is determined at a temperature of 200°C by using a parallel-plates rheometer model RMS-800 marketed by RHEOMETRICS (USA), operating at an oscillation frequency which increases from 0.1 rad/second to 100 rad/second. From the modulus separation value, the P.I. value can be derived using the following equation:

$$P.I. = 54.6(\text{modulus separation})^{-1.76},$$

wherein the modulus separation is defined as:

$$\text{modulus separation} = \frac{\text{frequency at G'= 500 Pa}}{\text{frequency at G''= 500 Pa}}$$

wherein G' is the storage modulus and G'' is the low modulus.

Temperature Rising Elution Fractionation technique (TREF) - This is a method of analyzing the crystalline structure of the polymer. The technique uses xylene as a solvent to dissolve the polymer crystal structure and determines the dissolved amount as the temperature is raised above room temperature up to a point where all of the polymer is dissolved. The portion dissolved at room temperature is designated as atactic, the portion dissolved between room temperature and 100°C is designated as stereoblock and the remaining portion above 100°C is called isotactic.

Percentage of Insolubles in Xylene - 2.5 g of polymer are dissolved in 250 ml of xylene at 135°C under agitation. After 20 minutes the solution is allowed to cool to 25°C, still under agitation, and then allowed to sit for 30 minutes.

The precipitate is filtered with filter paper, the solution evaporated in nitrogen flow, and the residue dried under vacuum at 80°C until constant weight is reached. Then the percentage by weight of the polymer soluble in xylene at ambient temperature is calculated. The percentage by weight of the polymer insoluble in xylene at ambient temperature is considered to be the polymer's isotactic index. The value thus obtained corresponds basically to the isotactic index determined by extraction in boiling n-heptane, which by definition constitutes the isotactic index of polypropylene.

Melting Point (M.P.) - Determined by DSC (Differential Scanning Calorimetry). The samples are previously melted by increasing the temperature to 200°C, and maintained at said temperature for 5 minutes. The samples are cooled to 50°C, and then reheated to the complete melting point. Both during the heating and cooling operation at a rate of 10°C/min. The melt temperatures reported refer to the top peak of the DSC curves obtained during the second melt.

<u>Example 1</u>

<u>Preparation of the solid catalyst component</u>

In a 500 ml reactor complete with porous barrier are introduced at 0°C 225 ml of $TiCl_4$. While stirring, 10.3 g of microspheroidal $MgCl_2$ $2.1C_2H_5OH$ is added over a period of 15 minutes. At the end of the addition the temperature is brought to 70°C, 9 mmoles of diisobutylphthalate are added and the content is heated to 100°C allowing it to react at this temperature for two hours, after which the $TiCl_4$ is filtered out. Then 200 ml of $TiCl_4$ are added and the content is allowed to react at 120°C for one hour, after which it is filtered and washed at 60°C with anhydrous heptane until all chlorine ions have disappeared from the filtrate.

The analysis of the solid component shows that the solid catalyst component contains 16.7 % by weight of Mg, 2.35 % by weight of Ti, and 7.2 % by weight of diisobutylphthalate.

The microspheroidal $MgCl_2$ $2.1C_2H_5OH$ adduct is prepared as follows.

48 g of anhydrous $MgCl_2$, 77 g of anhydrous $C_2H_5OH$, and 810 g of kerosene are introduced, under inert gas and at ambient temperature, into a 2 liter autoclave complete with turbine agitator and dip pipe. The content is heated to 120°C while under agitation, and the adduct is formed between $MgCl_2$ and the alcohol that melts and remains mixed to the dispersing agent. A nitrogen pressure of 15 atm is maintained inside the autoclave. The autoclave's dip-pipe is externally heated to 120°C by a heating jacket, and has a 1 mm inside diameter and a length of 3 m from end to end of the heating jacket.

The mixture is circulated through the pipe at a velocity of 7 m/sec.

The dispersion is gathered in a 5 liter flask, under agitation, said flask containing 2.5 liters of kerosene, and being externally cooled by a jacket maintained at the initial temperature of -40°C.

The final temperature of the emulsion is 0°C. The spherical solid product that constitutes the dispersed phase of the emulsion is separated by settling and filtration, then washed with heptane and dried.

All of the above procedures are carried out in an inert gas atmosphere.

130 g of $MgCl_2$ $2.1C_2H_5OH$ are obtained in the form of solid spherical particles with a maximum diameter of less than 50 microns. The product is then dealcoholized at temperatures which are gradually increased from 50°C to 100°C in nitrogen flow until the alcohol content reaches 2.1 moles per mole of $MgCl_2$.

<u>Propylene polymerization</u>

The polymerization is carried out continuously in a series of loop reactors equipped with devices for the transfer of the product coming out from the reactor immediately preceding to the one immediately following.

In liquid phase the hydrogen and the monomer are analyzed continuously and fed in such a manner that the desired concentrations will be maintained constant.

A mixture of triethylaluminum (TEAL) activator and 3,3,3-trifluoropropyl(methyl)dimethoxysilane (the TEAL/silane weight ratio is shown in Table A) is contacted with the solid catalyst component prepared above in a container for approximately 13 to 15 minutes.

The catalyst is then transferred to another reactor where the polymerization occurs in liquid phase to form fraction (A).

The product of the above reactor is fed to the second reactor in liquid phase to form fraction (B).

The relative operating conditions for the preparation of and physical properties of the propylene homopolymer obtained are set forth below in Table A.

Table A

| TEAL /Silane, wt. | 2.3 |
|---|---|
| **FIRST REACTOR** | |
| Temperature, C° | 70 |
| Pressure, bar | 34 |
| Residence Time, min | 107 |
| $C_3$ feed, kg/hr | 350 |
| Polymer produced, kg/hr | 153 |
| MIL, g/10 min | 0.8 |
| I.V., dl/g | 3.04 |
| **SECOND REACTOR** | |
| Temperature, C° | 65 |
| Pressure, bar | 34 |
| Residence Time, min. | 75 |
| $H_2$, g/hr | 20.5 |
| $C_3$ feed, kg/hr. | 150 |
| Polymer produced, kg/hr | 200 |
| MFR, g/10 min. | 3.9 |
| I.V., dl/g | 2.34 |
| **FINAL PRODUCT** | |
| Total polymer produced, kg | 1400 |
| MFR, g/10 min. | 3.8 |
| I.V., dl/g | 2.62 |
| Melting Point, °C | 161 |
| P.I. | 4.7 |
| Xylene insoluble, % | 96.1 |

<u>Example 2</u>

The flake material of Example 1 was blended with 1000 ppm of Irganox 1076 stabilizer, 500 ppm of Calcium Stearate and Lupersol 101 using conventional extrusion and pelletization processes to obtain a MFR of 38 g/10 min.

<u>Comparative 1</u>

A PF-301 propylene homopolymer of commerce, in pellet form, having a melt flow rate of 38 g/10 min. and a P.I of 2.5.

Table 1

| Polymer | I.V. | wt% Atactic @ 30°C | wt% Stereoblock @ 100°C | wt% Isotactic @ 120°C |
|---|---|---|---|---|
| Example 2 | 1.5 | 5.0 | 30.7 | 64.3 |
| Comp. 1* | 1.5 | 7.3 | 13.6 | 79.1 |

It can be seen from the data above in Table 1, that the propylene homopolymer of the present invention contains a much higher stereoblock content than the conventional propylene homopolymer.

Propylene homopolymers were prepared according to the method of Example 1, except using a solid catalyst component having a granular $MgCl_2$ support instead of a $MgCl_2$/ alcohol adduct, and using 3,3,3-trifluoropropyl(methyl) dimethoxysilane and other donors listed below in Table 2 as the external donors. The crystalline structures of the propylene homopolymers obtained were analyzed for atactic, stereoblock and isotactic content.

The results are set forth below in Table 2.

Table 2

| External Donor | wt.% Atactic @ 27°C | wt.% Stereoblock @ 98°C | wt.% Isotactic @ 126°C |
|---|---|---|---|
| 3,3,3-trifluoropropyl (methyl) dimethoxy silane | 3.45 | 25.76 | 69.47 |
| phenyltriethoxysilane | 3.19 | 10.70 | 86.33 |
| dicyclopentyldimethoxy silane | 0.49 | 2.23 | 96.44 |
| diphenyldimethoxysilane | 1.31 | 6.80 | 90.76 |

It can be seen that the crystalline structure of the propylene homopolymer prepared with 3,3,3-trifluoropropyl (methyl)dimethoxysilane as the external donor had a much higher stereoblock content than the crystalline structures of the propylene homopolymers prepared using other external donors.

Comparative 2

A SA-849 random copolymer of propylene and ethylene containing 3% of ethylene of commerce was visbroken from a MFR of 10 g/min to a MFR of 38 g/10 min., according to the process of Example 2. The random copolymer had a stereoblock content of 94.2%, an isotactic content of 2.5% and an atactic content of 3.3%.

Example 3

The propylene homopolymer of Example 2, and of comparative examples 1 and 2 were converted to spunbond fabrics. The pelletized product was extrusion melted to feed into a conventional spunbond spinning apparatus, wherein the molten polymer is converted to fiber, laid down on the belt to make a web, and then thermally bonded by a calender roll under five different bonding temperatures. The conditions used to make the spunbond fabric are as follows:

| | |
|---|---|
| Throughput Rate | 0.35 grams/min/hole |
| Extrusion Temperature | 210°C |
| Spin Belt Speed | 27 meters/min. |
| Basis Weight of Fabric | 40 grams/m$^2$ |
| Fiber size | 28 microns |
| Bonding Temperature | 104, 116, 127, 138 and 149°C |

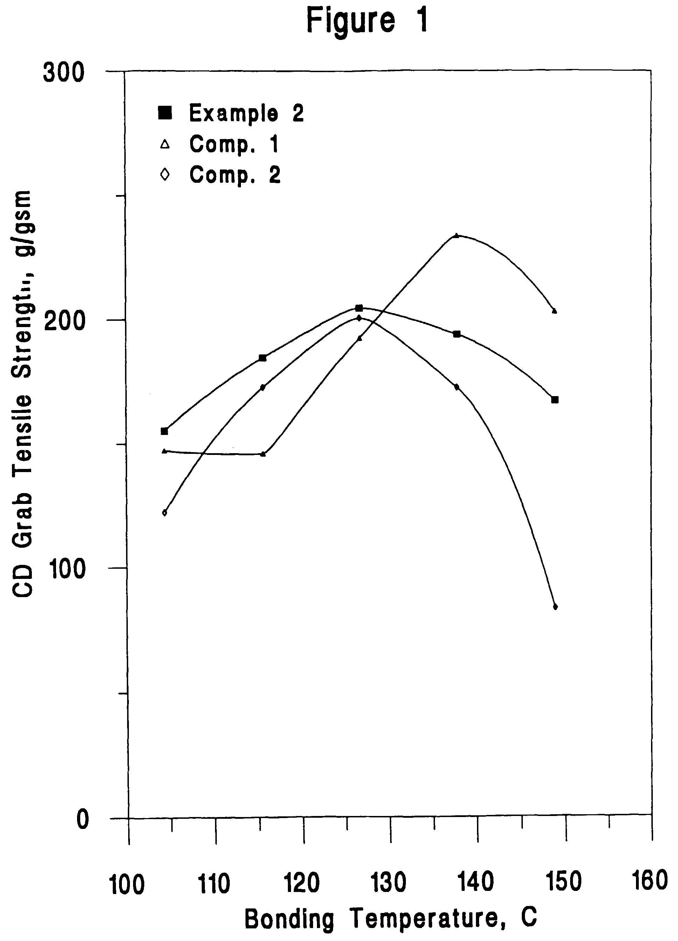

The fabrics obtained were tested for strength. The results are shown in Fig. 1. Three polymers were compared, the propylene homopolymer of Example 2, the conventional propylene homopolymer of comparative 1 and a conventional random copolymer of propylene and ethylene of comparative 2.

The cross-directional (CD) fabric grab tensile strength is one of the most important strength requirement for spunbond fabrics. When the propylene homopolymer of the present invention is compared with the conventional propylene homopolymer, it can be seen that the propylene homopolymer of the invention has a lower optimum bonding temperature than the conventional propylene homopolymer, 127°C vs. 138°C. Also, the propylene homopolymer of the present invention has a wider bonding window, that is, the bonding curve is flatter near the optimum bonding temperature, as compared to the convention propylene homopolymer.

When compared to the conventional random copolymer of propylene and ethylene of comparative 2, the propylene homopolymer of the present invention produces fabrics with higher tensile strength, even though both polymers have lower strengths than the conventional propylene homopolymer. Again, the propylene homopolymer of the invention provides a wider bonding window then the conventional random copolymer used.

Example 4

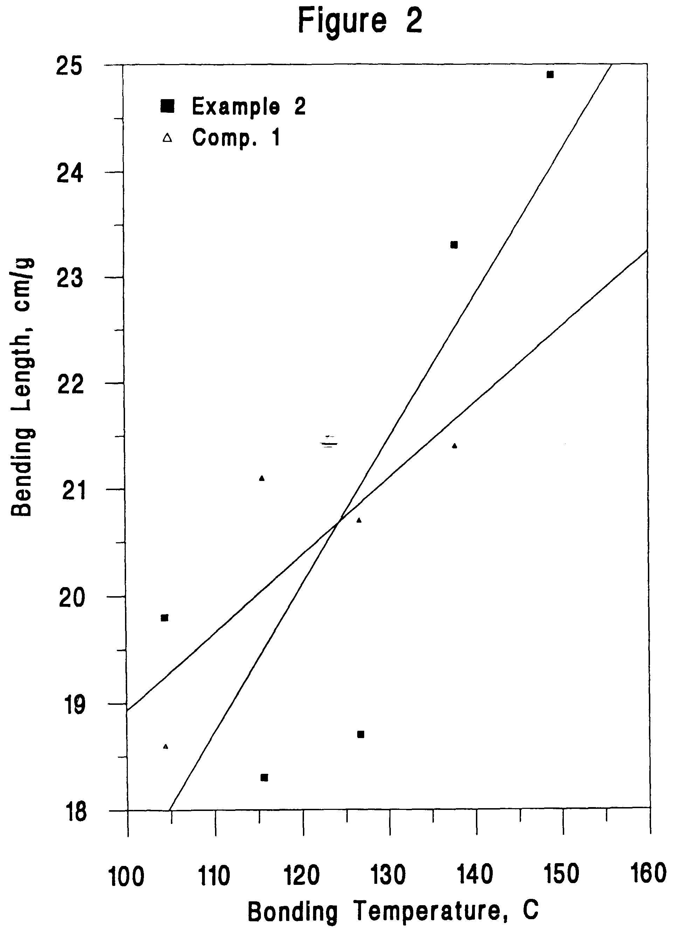

The fabrics prepared above in Example 3, were tested for softness, which is inversely proportional to the bending length. The results are shown in Fig. 2.

It can be seen that the propylene homopolymer of the present invention is softer at lower bonding temperatures, whereas the conventional homopolymer of comparative 1 is softer at higher temperatures. At optimum bonding temperatures, 127°C for the propylene homopolymer of the present invention used herein, and 138°C for the conventional propylene homopolymer, the softness of the fabric made from the propylene homopolymer of the present invention was comparable to that of the conventional propylene homopolymer.

Example 5

An ultra high melt flow propylene homopolymer was prepared according to the process of example 1, except that the polymerization temperature was 60°C instead of 65°C, having a melt flow of 278 g/10 min., P.I. of 4.2, stereoblock content of 25.2%, atactic content of 3.8 and isotactic content of 71.0%.

The polymer obtained above was emulsion stabilized with 1000 ppm Irganox 1076 stabilizer and 500 ppm Calcium Stearate and 500 ppm Lupersol 101 to obtain a melt flow of 600 g/10 min.

Comparative Example 3

A HH-442H ultra high melt flow propylene homopolymer having a melt flow rate of 800 g/10 min., 16.5% stereoblock content, 3.3% atactic content and 80.1% isotactic content, commercially available from HIMONT, U.S.A.

Example 6

The ultra high melt flow propylene homopolymer of Example 5 and of comparative example 3 were converted to melt blown webs. The conditions used to make the melt blown webs were as follows:

| Throughput Rate | 0.4 grams/min/hole |
| Melt Temperature | 254°C and 232°C |
| Basis Weight of Fabric | 34 grams/m$^2$ |
| Air Temperature | 285°C |

The fabrics were tested for softness. The MD bending length (cm) and CD bending length (cm) results are set forth below in Table 3.

Table 3

| Polymer | MD | CD |
|---------|-----|-----|
| Ex. 5 | 5.6 | 4.2 |
| Comp. 3 | 5.9 | 4.8 |

The softness of the fabric made from the propylene homopolymer of the present invention was comparable to that of the conventional propylene homopolymer.

Example 7

This example illustrates a film material of the propylene homopolymer material of this invention, in pellet form, having a MFR of 2.75 g/10 min., a P.I. of 5 and 4.3% xylene solubles and of a conventional propylene homopolymer film resin commerically available from HIMONT, Canada, in pellet form, having a MFR of 2.0 g/10 min., a P.I. of 5.3 and 4.6% xylene solubles.

A cast sheet was extruded on an one and a half inch Killion extruder at the following conditions:

Zone #1 - 450°F
Zone #2 - 480°F
Zone #3 - 480°F
Zone #4 - 480°F
Gate - 480°F
Die #1 - 480°F
Die #2 - 480°F
Speed - 97 RPM
Chill Roll temperature - 120-125°F
Chill Roll speed - 6.8 ft/min

The sheet samples of the propylene homopolymer of the present invention and of the conventional propylene homopolymer were stretched on a T.M. Long film stretcher at 3"/second, 35 psi force mode and simultaneous 6x stretch. Stress to orient measurements at yield point in the machine direction were taken at various temperatures of the two films.

The results are set forth below in Table 4.

Table 4

| Temperature (°C) | Inv.Ex. | Comp.Ex. |
|---|---|---|
| 135 | 491 | -- |
| 140 | 395 | 434 |
| 145 | 303 | 378 |
| 150 | 195 | 257 |
| 155 | 103 | 160 |

The propylene homopolymer of this invention can be used for spunbond nonwoven layer in SMS (spunbond-meltblown-spunbond) nonwoven laminate structures and in the production of other nonwoven materials, thermally bondable staple fibers, as well as, films, sheets, spunbond fabrics and melt blown fabrics.

Other features, advantages and embodiments of the invention disclosed herein will be readily apparent to those exercising ordinary skill after reading the foregoing disclosures. In this regard, while specific embodiments of the invention have been described in considerable detail, variations and modifications of these embodiments can be effected without departing from the spirit and scope of the invention as described and claimed.

**Claims**

1. A fiber produced from a propylene homopolymer of a stereoblock content in their crystalline structure of at least 20%, a P.I. value of from 3.0 to 5.0 and a MFR of from 0.15 to 1000 g/10 min, said homopolymer being obtained by polymerizing propylene monomer in the presence of a catalyst comprising the reaction product of:

   (A) a solid catalyst component comprising an active magnesium halide and, supported thereon, a titanium compound containing at least one Ti-halogen bond and an electron donor selected from the group consisting of esters of aromatic acids, alkyl or alkaryl ethers having only one ether linkage, ketones, mono or polyamines, aldehydes and phosphorous compounds;
   (B) an Al-alkyl compound; and
   (C) a 3,3,3-trifluoropropyl(alkyl)dimethoxy silane.

2. A web containing the fibers of claim 1.

3. The web of claim 2, wherein the web is nonwoven.

4. A fabric material produced from the web of claim 2.

5. A fabric material produced from the web of claim 3.

**6.** The web of claim 2, wherein the web is produced by melt blown or spunbond process.

**7.** A film comprising a propylene homopolymer having a stereoblock content in their crystalline structure of at least 20%, a P.I. value of from 4.5 to 6.5 and a MFR of from 0.15 to 1000 g/10 min, said homopolymer being obtained by polymerizing propylene monomer in the presence of a catalyst comprising the reaction product of:

(A) a solid catalyst component comprising an active magnesium halide and, supported thereon, a titanium compound containing at least one Ti-halogen bond and an electron donor selected from the group consisting of esters of aromatic acids, alkyl or alkaryl ethers having only one ether linkage, ketones, mono or polyamines, aldehydes and phosphorous compounds;
(B) an Al-alkyl compound; and
(C) a 3,3,3-trifluoropropyl(alkyl)dimethoxy silane.

**Patentansprüche**

**1.** Faser, hergestellt aus homopolymerem Propylen mit einem Stereoblockgehalt in seiner kristallinen Struktur von zumindest 20%, einem P.I.-Wert von 3,0 bis 5,0 und einem MFR-Wert von 0,15 bis 1.000 g/10 Min., wobei das Homopolymer erhalten wurde durch Polymerisation von monomerem Propylen in Gegenwart eines Katalysators, umfassend das Reaktionsprodukt von

(A) einer festen Katalysatorkomponente, die ein aktives Magnesiumhalogenid und eine hierauf getragene Titanverbindung, welche zumindest eine Titan-Halogen-Bindung enthält, und einen Elektronendonator umfaßt, ausgewählt aus der Gruppe, die aus Estern von aromatischen Säuren, Alkyl- oder Alkarylethern mit nur einer Etherbindung, Ketonen, Mono- oder Polyaminen, Aldehyden und Phosphorverbindungen besteht;

(B) einer Al-alkylverbindung; und

(C) eines 3,3,3-Trifluorpropyl(alkyl)-dimethoxysilans.

**2.** Endlosbahn, enthaltend die Fasern gemäß Anspruch 1.

**3.** Endlosbahn gemäß Anspruch 2 aus Wirrfaservlies.

**4.** Textilmaterial, hergestellt aus der Endlosbahn gemäß Anspruch 2.

**5.** Textilmaterial, hergestellt aus der Endlosbahn gemäß Anspruch 3.

**6.** Endlosbahn gemäß Anspruch 2, hergestellt durch ein Schmelzblas- oder Spinnvliesverfahren.

**7.** Folie, umfassend ein Propylenhomopolymer mit einem Stereoblockgehalt in seiner kristallinen Struktur von mindestens 20%, einem P.I.-Wert von 4,5-6,5 und einem MFR-Wert von 0,15-1.000 g/10 Min., wobei das Homopolymer erhalten wurde durch Polymerisation eines Propylenmonomeren in Gegenwart eines Katalysators, umfassend das Reaktionsprodukt von:

(A) einer festen Katalysatorkomponente, die ein aktives Magnesiumhalogenid und eine hierauf getragene Titanverbindung, die zumindest eine Titan-Halogen-Bindung enthält, und einen Elektronendonator umfaßt, der aus der Gruppe ausgewählt ist, welche aus Estern von aromatischen Säuren, Alkyl- oder Alkarylethern mit nur einer Etherbindung, Ketonen, Mono- oder Polyaminen, Aldehyden und Phosphorverbindungen besteht;

(B) einer Al-alkylverbindung; und

(C) eines 3,3,3-Trifluorpropyl(alkyl)-dimethoxysilans.

**Revendications**

1. Fibre fabriquée à partir d'un homopolymère de propylène possédant une teneur en stéréoséquences dans sa structure cristalline d'au moins 20%, une valeur P.I. de 3,0 à 5,0 et une valeur MFR de 0,15 à 1000 g/10 min, ledit homopolymère étant obtenu en polymérisant un monomère de propylène en présence d'un catalyseur comprenant le produit réactionnel de:

   (A) un composant de catalyseur solide comprenant un halogénure de magnésium actif et, déposé sur ce dernier, un composé de titane contenant au moins une liaison Ti-halogène, et un donneur d'électrons choisi parmi le groupe constitué par des esters d'acides aromatiques, des éthers alkyliques ou alkaryliques possédant une seule liaison éther, des cétones, des mono- ou polyamines, des aldéhydes et des composés du phosphore;
   (B) un composé d'alkylaluminium; et
   (C) un 3,3,3-trifluoropropyl(alkyl)diméthoxysilane.

2. Tissu contenant les fibres selon la revendication 1.

3. Tissu selon la revendication 2, dans lequel le tissu est non tissé.

4. Etoffe fabriquée à partir du tissu selon la revendication 2.

5. Etoffe fabriquée à partir du tissu selon la revendication 3.

6. Tissu selon la revendication 2, dans lequel le tissu est fabriqué via un procédé de soufflage en fusion ou via un procédé pour obtenir un non-tissé.

7. Film comprenant un homopolymère de propylène possédant une teneur en stéréoséquences dans sa structure cristalline d'au moins 20%, une valeur P.I. de 4,5 à 6,5 et une valeur MFR de 0,15 à 1000 g/10 min, ledit homopolymère étant obtenu en polymérisant un monomère de propylène en présence d'un catalyseur comprenant le produit réactionnel de:

   (A) un composant de catalyseur solide comprenant un halogénure de magnésium actif et, déposé sur ce dernier, un composé de titane contenant au moins une liaison Ti-halogène, et un donneur d'électrons choisi parmi le groupe constitué par des esters d'acides aromatiques, des éthers alkyliques ou alkaryliques possédant une seule liaison éther, des cétones, des mono- ou polyamines, des aldéhydes et des composés du phosphore;
   (B) un composé d'alkylaluminium; et
   (C) un 3,3,3-trifluoropropyl(alkyl)diméthoxysilane.

# Figure 1

# Figure 2